# DEMANDE DE BREVET EUROPEEN

(11) **EP 1 416 075 A1**
(43) Date de publication de la demande: **06.05.2004**
(21) Numéro de dépôt: 03103861.5
(22) Date de dépôt: 17.10.2003
(51) Int. Cl.: D03D 15/00, B29C 70/22

(54) **Ruban de renforcement comportant une nappe de fils longitudinaux de haute ténacité**

(30) Priorité: 29.10.2002 FR 0213535
(71) Demandeur: CHOMARAT COMPOSITES, 75002 Paris (FR)
(72) Inventeur: BAUDONNEL, Jacques, 07160, LE CHEYLARD (FR)
(74) Mandataire: Palix, Stéphane

(57) **Abrégé**

Ruban (1) de renforcement comportant une nappe (2) de fils longitudinaux de haute ténacité, à base d'aramide, de verre ou de carbone (3), liés entre eux par des fils de trame (4), caractérisé en ce qu'il comporte deux films (5,6) de matériaux thermoplastiques, disposés chacun sur une face de la nappe (2) de fils de haute ténacité (3).

## Description

### Domaine technique

L'invention se rattache au domaine des textiles techniques, et plus précisément aux armatures textiles utilisées en tant qu'éléments de renforcement. Elle vise plus particulièrement une nouvelle structure de ruban de renforcement, réalisée à partir de fils de haute ténacité, qui sont utilisés pour être enroulés autour de structures diverses en vue de les renforcer.

L'invention vise un perfectionnement à ce type de rubans qui permet de conserver la quasi-intégralité des propriétés de ténacité de ces rubans, lorsque ceux-ci sont soumis à des contraintes importantes, tant mécaniques que du point de vue des conditions climatiques.

### Techniques antérieures

De façon générale, de très nombreuses structures ont besoin d'être renforcées, car elles sont le siège de contraintes mécaniques particulièrement importantes. A titre d'exemple, on peut citer les conduites flexibles utilisées dans le cadre des forages pétroliers, qui doivent résister à des pressions particulièrement importantes lorsqu'ils conduisent les gaz sous pression. Les contraintes sont non seulement mécaniques, mais également thermiques et chimiques, puisque les matériaux employés doivent être inertes vis-à-vis des gaz transportés, et ne pas être dégradés lorsqu'ils sont utilisés en milieu aqueux et/ou salin. C'est pourquoi, les conduites utilisées comportent des renforts textiles, se présentant sous forme de rubans enroulés en hélice autour de la partie centrale de la conduite. Pour assurer une bonne résistance de la conduite à la pression interne régnant dans la conduite, il est connu d'utiliser des rubans à base de fils de haute ténacité, et notamment à base d'aramide, de fibres de verre ou de carbone.

Un tel ruban peut notamment être réalisé selon les enseignements du document EP 0.193.478 du Demandeur. Ce ruban comporte en effet des fils d'aramide longitudinaux, liés entre eux par des fils de trame tissés lâches, de telle manière que les fils d'aramide présentent le plus faible embuvage possible, et sont donc quasiment plats pour conserver leurs propriétés mécaniques.

Différents problèmes se posent avec les rubans réalisés à partir de ces fibres de haute ténacité, et notamment des dégradations des propriétés mécaniques du ruban dues au contact de ce ruban avec les éléments qui l'entourent. Ainsi, il est fréquent d'employer plusieurs rubans différents, qui sont enroulés les uns sur les autres, et généralement dans des sens différents. Dans ce cas, les fils d'aramide, de verre ou de carbone viennent au contact les uns des autres et subissent donc des frottements, notamment lorsque la conduite est flexible, car les différentes couches superposées ont tendance à coulisser les unes sur les autres. Il peut en résulter des dégradations des propriétés mécaniques de certains des fils, avec l'apparition donc de zones de fragilité qui peuvent être tout à fait préjudiciables à l'intégrité de la conduite.

Les fils longitudinaux d'aramide, de verre ou de carbone peuvent également subir le contact abrasif des autres éléments de renforcement utilisés de façon complémentaire. On conçoit évidemment que l'emploi de renforts métalliques, ou plus généralement avec un matériau de forte dureté, peut provoquer des coupures de certaines fibres, ce qui réduit au moins localement la ténacité globale du ruban. En outre, il arrive que les rubans de renfort soient recouverts de matériaux imperméabilisants tels que des résines et autres matériaux caoutchoutiques qui sont polymérisés in situ. Dans ce cas, ces matériaux pénètrent au moins partiellement à l'intérieur des fibres, et bloquent, après polymérisation, la possibilité qu'ont les fibres d'un même fil de coulisser les unes par rapport aux autres. Il en résulte une rigidification du ruban qui limite la flexibilité de la conduite, et peut même dégrader les propriétés de ténacité des fils longitudinaux.

Cet inconvénient est notamment observé dans les rubans qui ont subi une étape d'enduction d'un matériau thermoplastique en vue de les protéger des agressions extérieures.

Par ailleurs, il est connu que les fibres d'aramide présentent une forte sensibilité aux rayons ultra-violets. En effet, une exposition prolongée des fils d'aramide au soleil provoque une dégradation de la structure chimique des fibres d'aramide, qui se traduit non seulement par une évolution de leur coloris, mais surtout par une dégradation de leurs propriétés de résistance mécanique. C'est pourquoi lors de leur transport, les galettes de ruban d'aramide sont généralement protégées par des emballages opaques. Toutefois, cette protection n'est efficace tant que le ruban se situe à l'intérieur de l'emballage, et dès que le ruban est employé pour être enroulé sur la conduite ou plus généralement son support, il subit les agressions des rayons ultra-violets. Autrement dit, la protection constituée par l'emballage opaque n'est pas totalement satisfaisante, puisqu'elle ne garantit pas la protection aux ultra-violets jusqu'à la mise en place à destination.

Il se peut en outre que la destination finale du ruban de renforcement fait que ce dernier reste exposé aux rayons ultra-violets, et voit donc ses propriétés se dégrader après sa mise en place. On peut notamment citer l'emploi de ce ruban en tant qu'élément de renforcement d'ouvrages de travaux publics, et notamment de piles de ponts. Dans ce cas, se rajoute l'immersion du ruban dans l'eau, dont on sait également qu'elle dégrade les propriétés mécaniques de l'aramide.

Le problème que cherche à résoudre l'invention est celui de conserver les propriétés mécaniques des rubans de renforcement à base de fils longitudinaux de haute ténacité, et ce malgré les agressions de l'environnement extérieur, et notamment de l'humidité ou des rayons ultra-violets. Un autre problème est celui de la protection de ce ruban aux différents contacts abrasifs lorsque le ruban est mis en place.

### Exposé de l'invention

L'invention concerne donc un ruban de renforcement incluant de façon connue une nappe de fils longitudinaux de haute ténacité, à base d'aramide, de verre ou de carbone, liés entre eux par des fils de trame.

Conformément à l'invention, ce ruban se caractérise en ce qu'il comporte également deux films de matériaux thermoplastiques, disposés chacun sur une face de la nappe de fils longitudinaux.

Autrement dit, l'invention consiste à recouvrir les deux faces de la nappe de fils longitudinaux avec une couche de matériau thermoplastique, qui ne pénètre pas à l'intérieur de la nappe, et laisse donc une liberté de mouvement des fibres intérieures des fils. Ces films de matériaux thermoplastiques assurent donc une protection mécanique des fils contre les contacts extérieurs, et sans brider les fibres les unes aux autres, ce qui laisse au ruban une capacité de déformation suffisante pour pouvoir être configuré selon la géométrie de l'article à renforcer, et conservant de hautes propriétés mécaniques. Ces films de matériaux thermoplastiques sont donc interposés entre les nappes de fils de différents rubans lorsque ceux-ci sont superposés, empêchant donc le contact direct entre les fils, et les préservant donc d'une certaine abrasion.

En pratique, les films de matériaux thermoplastiques peuvent adhérer légèrement à la face de la nappe qu'ils recouvrent, de sorte qu'ils présentent alors la même largeur que celle de la nappe.

Dans une variante de réalisation, les deux films de matières thermoplastiques peuvent être liés les uns aux autres au niveau des lisières du ruban, et donc ainsi emprisonner la nappe de fils. Ces films peuvent résulter soit de deux feuilles distinctes soudées au niveau des deux lisières du ruban, ou bien encore d'une seule feuille repliée sur elle-même en étant soudée au niveau d'une seule lisière du ruban.

Avantageusement en pratique, la nappe de fils longitudinaux peut être apte à coulisser à l'intérieur de la gaine formée par les deux films. Autrement dit, la nappe de fils présente une certaine liberté de mouvement par rapport aux films qui n'adhèrent pas à la nappe, mais au contraire lui autorisent un léger déplacement. Cette latitude de mouvement de la nappe permet à cette dernière de se déplacer lorsque le ruban est configuré ou enroulé sur sa destination, de sorte que les contraintes sur les fils de haute ténacité sont relativement réparties, ce qui favorise la conservation de bonnes propriétés mécaniques.

Dans une forme préférée appliquée au cas de l'aramide, chacun des films présente des propriétés de blocage de rayonnement ultra-violet, de sorte que les fils d'aramide du ruban sont protégés contre le rayonnement extérieur, et conservent donc leurs propriétés mécaniques d'origine. Ainsi, les fibres d'aramide sont protégées dès la production du ruban grâce à la mise en place des films caractéristiques, et ce jusqu'à l'emploi à destination sur l'article à renforcer.

Avantageusement en pratique, les fils longitudinaux peuvent être liés entre eux par des fils de trame au moins partiellement thermofusibles. Ces fils de trame peuvent être soit à base d'un matériau thermofusible, soit être des fils comportant une âme, et enduits d'un matériau thermofusible. Il est possible d'utiliser des schémas de trame comportant un ou plusieurs fils de trame par pas.

Ainsi, on peut avantageusement utiliser pour les fils de trame et pour les films recouvrant la nappe des matériaux thermofusibles aux propriétés analogues, notamment en ce qui concerne les températures de ramollissement, de sorte que lors de la mise en place des films caractéristiques, on réalise un chauffage qui révèle les propriétés thermofusibles des fils de trame, assurant ainsi un ancrage des films sur les fils de trame.

En pratique, pour assurer une protection à l'humidité, on peut également utiliser des films microporeux possédant des propriétés respirantes, permettant donc d'évacuer l'humidité présente à l'intérieur de la gaine extérieure formée par le film.

### Description sommaire des figures

La manière de réaliser l'invention, ainsi que les avantages qui en découlent, ressortiront bien de la description des modes de réalisation qui suivent, à l'appui des figures annexées dans lesquelles :
La figure 1 est une vue de dessus d'un ruban conforme à l'invention, dans laquelle une partie d'un des films caractéristiques a été ôtée.
La figure 2 est une vue en coupe transversale du ruban de la figure 1.
Les figures 3 et 4 sont des vues en coupe de variantes de réalisation.

### Manière de réaliser l'invention

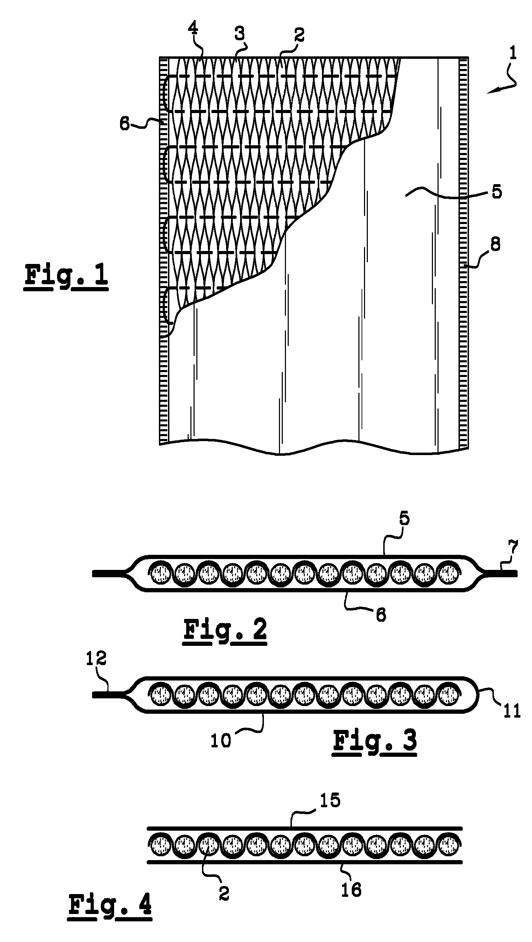

Le ruban (1) illustré à la figure 1 comporte une nappe (2) de fils (3) d'aramide, tissée avec des fils de trame (4) de manière lâche. Cette nappe (2) reçoit sur chacune de ses faces un film (5,6) de matière thermoplastique.

Dans la forme illustrée à la figure 1, les deux films (5,6) sont plus larges que la nappe de fils (3), et en dépassent latéralement dans les zones dans lesquelles ils viennent en regard où ils sont soudés. Ces zones de soudure forment donc les lisières (8) du ruban.

De la sorte, la gaine formée par les deux films (5,6) autorise un léger mouvement de la nappe de fil (2), et facilite sa déformation lorsque ce ruban est utilisé sur des supports non plats.

La figure 3 illustre une variante de réalisation dans laquelle la gaine est formée par un film unique (10) replié sur lui-même pour former la lisière (11), et qui est soudée sur elle-même au niveau de la zone (12) correspondant aux lisières de la feuille formant le film (10).

L'invention couvre également la forme de réalisation illustrée à la figure 4, dans laquelle la nappe de fils d'aramide (2) reçoit deux films distincts (15,16), situés chacun sur une face de la nappe (2). Dans ce cas, les deux films (15,16) adhèrent légèrement à la nappe de fils d'aramide, après avoir été exposés à une source de chaleur.

En pratique, les fils (3) de la nappe (2) sont réalisés à base d'aramide, et peuvent donc être notamment choisis parmi les produits commercialisés sous la marque Kevlar® par la Société DU PONT ou TWARON® par la Société TEIJIN. Chaque fil peut être préférentiellement un câblé de plusieurs bouts, de titre unitaire compris entre 1670 dtex et 3300 dtex selon la fonction des applications. Il peut recevoir également une torsion dans les sens S et Z de l'ordre de 60 tours/mètre. Bien entendu, le nombre de bouts, ainsi que le titre de chaque bout et leur torsion, peuvent être adaptés en fonction de l'application souhaitée.

En pratique, on obtient des bons résultats en utilisant des nappes dont les fils, éventuellement multibrins, sont nombreux, d'environ dix par centimètres, et ce sur une largeur pouvant aller d'environ cinq à vingt centimètres.

Comme déjà évoqué, la nappe (2) de fils d'aramide est tissée de manière lâche, c'est-à-dire de telle manière à ce que les fils de chaîne soient le plus plats possible, et donc présentent un embuvage particulièrement faible. Ce type de tissage, également appelé"tissage haut module", entraîne donc que l'embuvage des fils de trame est relativement important. Les fils de trame sont donc relativement espacés, et typiquement de l'ordre de 1 à 3 fils/centimètre environ.

Le fil employé pour former la trame (4) présente préférentiellement des propriétés thermofusibles. Il peut par exemple s'agir de fils de polyester, typiquement d'un titre de 4,9 à 110 tex. Il peut également s'agir de fils possédant une âme qui n'est pas thermofusible, et par exemple à base de fibres de verre d'un titre de 5,5 à 68 tex, recevant une gaine qui est thermoplastique, et par exemple à base de polyamide.

On a obtenu de bons résultats en utilisant des films (5,6) à base de polyester, d'une épaisseur de l'ordre de 20 à 50 microns. Ce film de polyester présente l'avantage d'être thermofusible, mais l'invention couvre également d'autres variantes dans lesquelles le film présente des propriétés spécifiques. On peut par exemple utiliser des films complexes multicouches, présentant par exemple un revêtement à faible coefficient de frottement, tel que du polytétrafluoroéthylène. On peut également utiliser des films possédant des propriétés imper-respirantes, choisies pour permettre le passage de la vapeur d'eau depuis l'intérieur de la gaine vers l'extérieur, tout en interdisant la pénétration de l'eau à l'intérieur de la gaine lorsque celle-ci est immergée. On peut également utiliser des films qui possèdent des charges conférant une opacité du film à un certain rayonnement, notamment au rayonnement ultra-violet, dont on sait qu'il est une cause de dégradation des propriétés mécaniques de l'aramide.

En pratique, les rubans ainsi obtenus présentent une résistance voisine de quelques dizaines de kN/cm de large, la largeur utile étant uniquement mesurée sur la nappe de fils d'aramide.

En pratique, le ruban conforme à l'invention peut être obtenu par la mise en place des films caractéristiques sur une nappe de fils d'aramide. Mais on préfèrera généralement que les films caractéristiques soient mis en place directement après les opérations de tissage. Ainsi, à la tombée du métier formant la nappe (2), cette dernière reçoit sur ses faces supérieure et inférieure les films de matière plastique (5) et (6) qui peuvent être chauffés de différentes manières, et notamment par exposition aux rayonnements d'une source de chaleur. Ce réchauffement provoque l'élévation de la température des films (5,6), et la fusion très légère de leur surface de contact avec la nappe (2) d'aramide provoquant donc une adhésion.

Cette exposition à une source de chaleur provoque non seulement la légère fusion des films caractéristiques, mais également celle des fils de trame (4) reliant les fils d'aramide (3). Ces fils de trame adhèrent ainsi aux fils d'aramide, ce qui améliore la tenue de la nappe, bien que le nombre de fils de trame soit particulièrement réduit.

Ce mode opératoire est notamment utilisé pour réaliser le ruban illustré à la figure 4. L'ensemble nappe (4) et films (15,16) peut recevoir ensuite une légère pression permettant d'uniformiser l'adhésion. Cette pression peut s'obtenir par calandrage, mais elle peut également résulter de la pression propre de l'enroulement du ruban sur un mandrin.

Pour réaliser le ruban (1) des figures 1 et 2, les films (5) et (6) sont également mis en place au dessus et en dessous de la nappe (4) de fils, et éventuellement chauffés. Ils reçoivent ensuite par des roulettes chauffantes situées dans leur lisière, une quantité de chaleur assurant la réalisation de la zone de soudure (7).

Bien entendu, l'invention n'est pas limitée aux seules formes de réalisation illustrées aux figures et précisées par des valeurs numériques, mais elles peuvent couvrir de multiples variantes, choisies en fonction des applications, notamment lorsque les fils de haute ténacité sont en fils de verre ou en carbone.

Il ressort de ce qui précède que le ruban conforme à l'invention présente de multiples avantages, et celui notamment de permettre une protection de fils d'aramide vis-à-vis du rayonnement ultra-violet, ainsi que d'autres facteurs extérieurs tels que l'humidité notamment. Il permet également une protection mécanique des fibres de haute ténacité vis-à-vis de l'abrasion générée par le contact avec d'autres éléments mécaniques, et notamment du ruban lui-même lorsque celui-ci est enroulé. Cette protection s'obtient sans dégradation des propriétés mécaniques des fils employés.

## Revendications

1. Ruban (1) de renforcement comportant une nappe (2) de fils longitudinaux de haute ténacité, à base d'aramide, de verre ou de carbone (3), liés entre eux par des fils de trame (4), **caractérisé en ce qu'**il comporte deux films (5,6) de matériaux thermoplastiques, disposés chacun sur une face de la nappe (2) de fils de haute ténacité (3).

2. Ruban (1) de renforcement selon la revendication 1, **caractérisé en ce que** chaque film (15,16) de matériaux thermoplastiques adhère à une face de la nappe (2).

3. Ruban (1) de renforcement selon la revendication 1, **caractérisé en ce que** les deux films (5,6) de matériaux thermoplastiques sont liés l'un à l'autre au niveau des lisières (8) du ruban (1).

4. Ruban (1) de renforcement selon la revendication 3, **caractérisé en ce que** la nappe de fils longitudinaux est apte à coulisser à l'intérieur de la gaine formée par les deux films (5,6) de matériaux thermoplastiques.

5. Ruban (1) de renforcement selon la revendication 1, **caractérisé en ce que** chaque film (5,6 ; 10 ; 15,16) présente des propriétés de blocage du rayonnement ultra-violet.

6. Ruban (1) de renforcement selon la revendication 2, **caractérisé en ce que** les fils longitudinaux sont liés entre eux par des fils de trame au moins partiellement thermofusibles.

7. Ruban (1) de renforcement selon la revendication 6, **caractérisé en ce que** le matériau thermofusible des fils de trame et le matériau des films recouvrant la nappe (2) sont analogues.
